# EUROPEAN PATENT SPECIFICATION

(11) **EP 2 694 282 B1**
(45) Date of publication and mention of the grant of the patent: **05.08.2020**
(21) Application number: 12768650.9
(22) Date of filing: 05.04.2012
(51) Int. Cl.: B32B 7/10, G09F 3/10, B32B 9/02

(54) **A PLASTIC LABEL**
KUNSTSTOFFETIKETT
ÉTIQUETTE EN MATIÈRE PLASTIQUE

(30) Priority: 06.04.2011 US 472223 P; 06.04.2011 FI 20115329
(43) Date of publication of application: 12.02.2014
(73) Proprietor: UPM Raflatac Oy, 33310 Tampere (FI)
(72) Inventor: MITCHELL, Noel, 42111 Wuppertal (DE); TORMIN, Dirk, D-40629 Düsseldorf (DE)
(74) Representative: Berggren Oy, Tampere
(86) International application number: PCT/FI2012/050347
(87) International publication number: WO 2012/136895

(56) References cited:
- EP-A1- 2 284 237
- WO-A1-02/074874
- US-A1- 2002 182 403
- US-A1- 2002 182 403
- US-B1- 6 224 974
- DATABASE WPI Week 198651 Thomson Scientific, London, GB; AN 1986-335177 XP002728396, & JP S61 250080 A (NICHIBAN KK) 7 November 1986 (1986-11-07)

## Description

### Field of the Invention

The invention relates to labels, and more specifically to clear polymer labels that are removable and recyclable.

### Background of the Invention

It is general practice to apply labels to the surface of an item, such as a bottle or a container from polymer or glass, to provide decoration, and/or to display information about the product being sold, such as the content of the item, a trade name or logo.

Removable labels are an important issue, for example, in beverage industry where bottles are preferably recycled and/or reused and refilled. Removable labels, also called wash-off labels, are removed from the bottles in conventional washing processes used in industry.

The removable labels, known from prior art, have been based on paper materials, which may become easily disintegrated into the washing liquid. Another known approach, which is typically used in combination with the paper labels, has been to select adhesives which are soluble into the water based washing liquid and thus lead to the removal of the labels. One further known possibility is to use heat-shrinkable plastic films, which shrink and curl under washing conditions and thus detach the label from the bottle. Plastic wash-off labels, in contrast to paper labels, are increasingly preferred, for example due to their better mechanical properties and more appealing visual appearance i.e. transparent no-label look to decorate glass or plastic containers.

There are also other requirements for labels. Labels should be for example cost-effective, environmentally- and userfriendly. Since environmental aspects play an increasing role, recycling of the labels is an important issue.

There exists a need for environmentally friendly clear plastic labels for identification and decoration of returnable items, such as containers and bottles, wherein the labels can be easily and completely removed from the respective item during the conventional process to re-use or recycle the item and wherein the removed labels which are washed off from the item can be further recycled either alone or together with paper based labels.

D1 (US 2002/182403 A1) discloses a water dissolvable adhesive tape. The tape comprises a water dissolvable substrate comprising soluble starch and cellulose fibers, and an adhesive layer.

D2 (JP S61250080 A) discloses edible tape, sheet or label obtained by laying pullulan-containing pressure-sensitive adhesive layer on the surface of the substrate. The substrate may be water-soluble, edible, or naturally decomposing.

D3 (EP 2 284 237 A1) discloses wash-off labels comprising filmic layer and at least one pressure-sensitive adhesive layer. The filmic layer may comprise a single layer film or a multilayer film, which comprises layers formed from, for example, polyolefin, polyacrylate, polystyrene, or biopolymers. Biopolymer may be selected from the group comprising, for example, carbohydrates, polysaccharides, starch, cellulose, glycogen, hemi-cellulose, chitin etc.

D4 (WO 02/074874 A1) discloses labels made from biopolymers used with aqueous adhesives. Label comprises a self-supporting sheet of biopolymer, such as cellulose, cellulose acetate and/or PLA. D6 (US 6 224 974 B1) discloses a water resistant, caustically removable coating to make a paper label which is water resistant but can be repulped in conventional caustic bottle washing solution.

### Summary of the Invention

It is an object to provide a label, which is easy to remove from the surface of an item by a re-using process, such as a washing process. It is an object to provide a clear filmic structure for removable labels used in labelling of reusable items, such as glass and plastic bottles or containers for the beverage industry or other reusable or recyclable items. It is an object to provide a label, which is recyclable in a repulping process.

According to a first aspect of the invention a label is provided, which can be attached to the surface of an item and is subsequently removable from the surface. The label comprises at least an adhesive layer and a plastic facestock layer including a starch based polymer. The facestock layer is transparent to visible light.

According to a second aspect of the invention the use of a label is provided for labelling of recyclable or reusable items.

According to a third aspect of the invention a method is provided for recycling a label attached to the surface of an item, the method comprising: conveying the item to a washing process comprising heated washing liquid; exposing
the label to the hot washing liquid; peeling off the label from the surface of the item; collecting the peeled off labels from the washing liquid; and repulping the collected labels.

According to a fourth aspect of the invention, a facestock layer of a label is provided, which is transparent to visible light and includes at least one plastic film layer comprising starch based polymer.

According to a fifth aspect of the invention, a combination of an item and a label is provided. The combination consists of a label attached to a surface of the item, and which label is further arranged to be removable from the surface of the item. The label comprises a plastic facestock layer transparent to visible light and an adhesive layer against one side of the facestock layer. The facestock layer includes a starch based polymer.
Further embodiments of the invention are presented in the dependent claims.

The label facestock comprises a starch based polymer, which may be a partially fermented starch, a physically modified thermoplastic starch, a chemically modified starch, or a starch blend. Preferably, the starch based polymer is unmodified or chemically modified amylose rich starch, or starch blend. Starch based polymer may be hydroxypropylated starch. The amylose content of the starch may be at least 40%, preferably higher than 70%. The starch blend may comprise biopolymer(s), such as cellulose nanofibers, chitosan or lignin.

The label faestock includes at least one layer having a composition comprising starch based polymer from 85 to 90 wt-%. The haze of the facestock may be less than 25%, preferably less than 15% and most preferably less than 20%.

The label may be repulpable into paper. The label may be used in the repulping process and repulped as such or alternatively together with paper waste.

The washing liquid may be an alkaline washing liquid. The liquid may comprise caustic soda about 1-4 wt-%. The temperature of the washing liquid may be e.g. higher than or equal to 60 °C.

### Description of the Drawings

The present invention will be described below, with reference to the appended drawing, in which
- Fig. 1: shows, in a cross-sectional view, a label attached to the surface of an item,
- Fig. 2: presents, in a cross sectional view, a laminate structure for labels,
- Fig. 3: presents, in a cross sectional view, a laminate comprising diecut labels,
- Fig. 4: presents, in a cross sectional view, individual labels released from the liner,
- Fig. 5: presents, in a side view, a label removed from an item.

### Detailed Description of the Invention

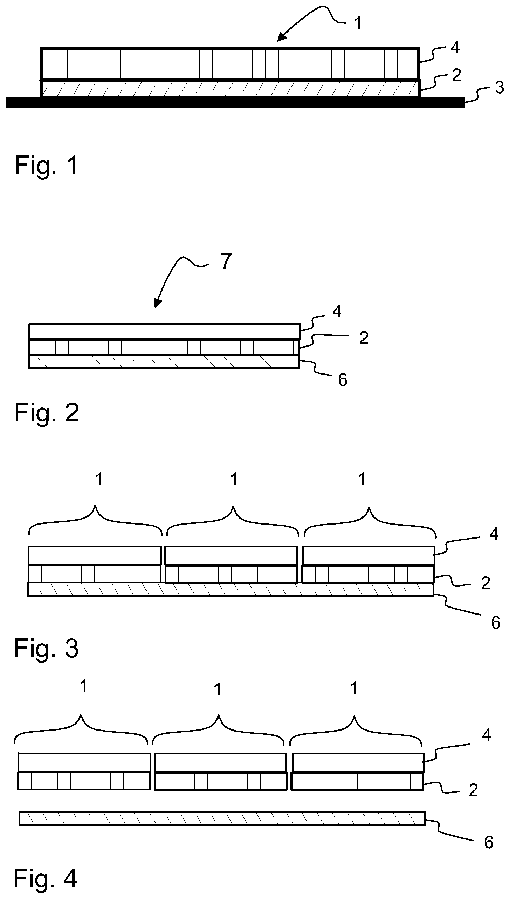

Referring to Fig. 1, a label 1 is attached by an adhesive layer 2 to the surface 3 of an item. The item may be a recyclable or reusable item, such as a plastic or glass bottle or container. The label structure comprises a facestock 4 layer against the adhesive layer 2. The facestock may also be called as a substrate layer. The facestock layer 4 is the substrate on to which the adhesive layer 2 is applied and the substrate upon which printing is performed. Graphical patterns may be printed on the facestock 4 e.g. in order to provide a visual effect and/or in order to display information. The facestock may be printed on the reverse side so that the print layer is between the facestock layer 4 and the adhesive layer 2. Alternatively, the printing and adhesive layers may be applied on opposite surfaces of the facestock 4, i.e. the printing is on the exterior side of the facestock.

The facestock 4 may comprise a monolayer or a multilayer structure having two or more plastic film layers. The multilayer structure may be laminated or coextruded. The facestock layer may be partially or totally oriented monoaxially in the machine direction or biaxially, or it may be non-oriented. The multilayer facestock may comprise individual plastic film layers having different compositions, or alternatively all layers may have the same composition.

The total label structure may also comprise other layers in order to improve the properties, such as label functionality, conformability, printability, die-cutting, mechanical properties, or visual appearance. For example, a tie layer, a top coat or an over-laminate may be applied to the facestock for protection or to enhance the adhesion of ink and/or adhesive or to modify the water permeability.

Alternatively, facestock layer(s) i.e. adhesive and/or print receiving layer(s) may be surface treated by known methods in the art, such as flame treatment, corona treatment, plasma treatment, in order to enhance for example adhesion.

According to the invention, the facestock has a clear plastic film, also called filmic, structure providing a no-label look appearance. The clear plastic film structure is substantially transparent to visible light. The clear no-label look of the facestock allows the objects beneath such layer, i.e. the bottle or contents, to be visible through such layer.

According to one embodiment of the invention, the facestock layer is hydrophilic and capable of absorbing moisture under washing conditions. The facestock layer may also swell during washing process.

According to the invention, a facestock comprises a starch based polymer. Starch is a naturally occurring polymer, polysaccharide, consisting of a large number of glucose monomers joined together. In addition, starch is a biodegradable biopolymer and is obtained from renewable resources. Starch is typically found in seeds, tubers, roots and fruit, as well as in plants such as potato, corn and rice. The primary feedstock for starch-based film is a starch with a naturally high content of amylose, derived from corn.

Native starch is water sensitive, it has e.g. poor melt processability, limited melt film forming ability and rather weak mechanical properties. Thus, starch derivatives are preferred for plastic films. Preferably, native starch is converted to thermoplastic state prior to film manufacturing, for example through extrusion, plasticizers or chemical modification. Starch based polysaccharides suitable for film manufacturing include, for example, partially fermented starch, physically modified thermoplastic starch, chemically modified starch, and starch blend.

According to one embodiment of the invention, the facestock includes chemically modified starch, such as hydroxypropylated starch, with a high amylose content, also designated as amylose rich starch. Amylose rich starch has an amylose content of at least 40%, preferably higher than 70%. This chemically modified starch behaves like a thermoplastic and is thus suitable for film manufacturing, i.e. melt processing. Alternatively, other chemically modified starches, such as acid-modified or acetylated starch; fermented starch; physically thermoplastic starch, or blends of two or more thereof, may be used for facestock. Starch may also be blended with suitable biopolymers, for example with cellulose nanofibers, chitosan and/or lignin in order to produce biopolymer composite facestock.

An adhesive should be selected in order to have optimized clean removal from the item in the washing process. Preferably, the adhesive is such that under the influence of washing conditions it loses its adhesion to some degree but does not dissolve in the washing liquid. Therefore, the washing liquid does not become contaminated with the adhesive. Preferably, the adhesive detaches from the container together with the label facestock during the washing process. The adhesive stays attached to the facestock and it may be repulped together with the facestock. Alternatively, the adhesive may be removed during the de-inking process of the facestock prior to repulping.

The adhesive may be based on acrylic polymers or block copolymer rubber or natural rubber based polymers. Due to the hydrophilic nature and water permeability of the facestock, also water based adhesive systems, i.e. wet-glue or cold glue, can be used, for example biopolymer based adhesives, such as starch based adhesives. Alternatively, the adhesive layer may have a double layer structure comprising two different adhesives. However, it is preferred that the adhesive is clear.

The label 1 may be a pressure-sensitive adhesive (PSA) label. Pressure sensitive labels, also called self-adhesive labels, can be adhered to most surfaces through an adhesive layer without the use of a secondary agent such as solvents or heat to strengthen the bond. The pressure sensitive adhesive forms a bond when pressure is applied on the label at room temperature, adhering the label with the item to be labelled. Typically, PSA labels consist of a release liner and a facestock layer which are laminated together with a pressure sensitive adhesive layer in between. The release liner protects the adhesive and is removed prior to the application of the label to the surface of an item.

According to the invention, the label is removable and can be detached from the surface attached. Removability of the label refers to the removal of the label from the surface of an item when washing the item in a conventional washing process to permit its re-use and/or recycling. Removable labels may also be referred to as wash-off labels. The washing process may comprise an elevated temperature between 60 to 90 degrees C and an alkaline wash solution containing between 1-4% caustic soda. During the washing process, the label peels off the item due to the decrease of the bonding effect of the adhesive, and remains in the washing liquid. The label will most likely sink due to its specific gravity being greater than 1 .

Ideally, the label peels off and is completely removed with no residue being left behind on the surface of the item. Preferably, the adhesive layer remains bonded to the label facestock.

Subsequently, removed labels can be removed mechanically, for example collected by means of a sieve, from the washing liquid and recycled and used in a repulping process.

Label removability may be affected i.e. enhanced, for example by adhesive composition or type, water absorption of the label, and shrinkage or expansion of the face material layers.

According to the invention, the labels are repulpable i.e. recyclable through the pulping process back into paper by known methods in the art. Generally, the recycled pulp is mixed with virgin pulp. Removed labels, which include starch based polymer(s), are compatible with paper recycling and pulping and do not interfere with the pulping process. Removed labels can be used in a repulping process, for example as an additive to provide e.g. adequate strength and printing properties to the paper web or final paper sheet.

According to one embodiment of the invention, starch based labels may be recycled as such or alternatively together with paper based labels which may be also removed from the bottles or other items, or together with other paper waste, such as old newspapers and magazines, and further repulped into paper and subsequently used, for example, in paper based label production.

In this application, label refers to a product comprising at least a facestock layer, also called as a face layer, a facing material, or a substrate, and an adhesive layer. Facestock layer refers to a top layer of the label, which is attached to another surface with an adhesive layer, when the label is used. Release liner refers to a structure comprising a backing material and a release agent.

Referring to the Fig. 2, a laminate web structure 7 for labels comprises a facestock layer 4, an adhesive layer 2, and a release liner 6. The total thickness of the facestock is not greater than 150 µm, preferably not greater than 85 µm, most preferably not greater than 80 µm. The thickness may be, for example, between 35 and 150 µm or between 35 and 80 µm, preferably between 35 and 60 µm.

The release liner may be a polymeric film, such as a polyester or polypropylene film, or a paper based, such as a glassine or kraft paper. The thickness of the liner may be, for example, 25 microns. The release liner may be coated with a thin layer of releasing agent, such as a silicone polymer, in order to ease the subsequent removal of the release liner from the label structure before the label is adhered to the surface of an item. During the manufacture of a label laminate web structure 7, the release liner 6 may be coated with an adhesive layer 2, such as a pressure-sensitive adhesive, and dried under heat in an oven. Subsequently, the release liner with an adhesive layer may be combined (laminated) with a facestock layer 4 in order to form a laminated web structure. Alternatively, the adhesive layer may be applied on the facestock prior to combining with the release liner. One purpose of a release liner of the label laminate structure is to protect the adhesive layer of the label and allow efficient handling until the label is ready to be used and adhered to another surface, such as the surface of a bottle.

Referring to the Fig. 3, individual labels 1 may be cut from the laminate web structure 7. After cutting, a number of individual labels 1 may be attached to a liner 6, which remains uncut and continuous. Thus, a release liner may provide also a die-cutting base. Alternatively, the individual labels 1 may be completely separate, i.e. also the liner 6 may be cut. A label refers to a product which comprises at least a face layer 4 and an adhesive layer 2. Prior to the application the label comprises also a release liner 6.

Referring to the Fig. 4, the label 1 may be separated from the liner 6 prior to the application of the label. Thus, when using the label, i.e. when attaching a label to another surface, a surface of the adhesive layer 2 is exposed so that said label can be attached to the surface 3 of an item, as shown in Fig. 1. The adhesive layer 2 is in direct contact with the surface 3 of the item, such as a bottle or another container.

According to one embodiment of the invention, the facestock 4 of the label is a monolayer plastic film. Alternatively, a multilayer plastic film structure may be used as a facestock layer. In order to provide more optimized properties for the label, multilayer structures are used. For example, skin layer(s) may have other composition when compared to a core layer. As an example, the core layer may comprise high amount of starch based polymer and the skin layer may consists of another polymer, such as polyvinyl alcohol (PVA). Also thickness of the individual layers in the multilayer structure may vary. For example, the thickness of the core layer may be dominating and further covered with thin skin layers. However the total thickness of the film is preferably less than 150 µm.

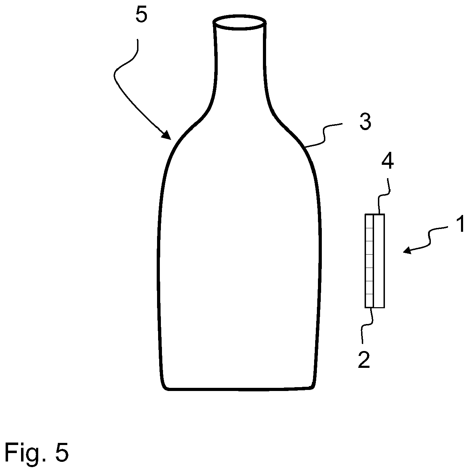

According to the invention, the label is a wash-off label, i.e. it is easily removed from the surface of an item labelled as shown in Fig. 5. Ideally, the label 1 is completely removed from the surface of an item during a washing process with no residue being left on the surface 3 of the item. The washing process comprises a washing liquid, e.g. an alkaline washing solution. Additionally, the short amount of time the labelled item must remain in the washing solution before the label is removed is preferred. The removal of the label within less than 50 seconds, preferably within 30 seconds or less is considered as a good wash-off result. The label is completely dispersed in the washing liquid in less than 5 minutes.

The method for removing the label from a surface of an item comprises exposing the label to an alkaline washing liquid at a temperature which is in the range of 60-90 °C. The alkaline washing liquid may contain e.g. from 0.5 to 10%, in particular from 1 to 4% caustic soda (by weight). The pH of the alkaline washing liquid is above 7. The temperature of the washing liquid may be e.g. higher than or equal to 60 °C, preferably in the range from 80 to 85 °C. During the washing process the label is exposed to the washing liquid and the adhesive layer 2 loses its adhesive force, and the label is subsequently detached from the surface 3.

After detaching the label from the surface of the item, the facestock layer, having monolayer or multilayer plastic film structure, is dispersed finely in water. Subsequently, it may be reprecipitated by centrifuging or by allowing in to settle and sink due to gravitation. Due to the process of bacterial degradation, the starch may also break down to water and carbon-dioxide in a relatively short time.

According to an example embodiment, the facestock of the label has a monolayer structure consisting of a plastic film comprising at least 60 wt-% of starch based polymer. For example, between 60 and 70 wt-% or preferably between 85 and 90 wt-% based on the total weight of the film composition.

According to an embodiment, the facestock of the label has a multilayer structure. The total amount of starch based polymer is at least 40 wt-%, preferably at least 50 wt-%, most preferably at least 60 wt-%. In addition, the starch content is between 40 and 80 wt-% or between 60 and 70 wt-% based on the total weight of the facestock. For example, the multilayer structure has a structure consisting a core layer and at least one skin layer against at least one side of the core layer. As an example, the core layer of the multilayer structure has a composition comprising high amount of starch based polymer, e.g. 85-90 wt-%, and the skin layer(s) consisting of polyvinyl alcohol (PVA).

Preferably, a facestock includes at least one plastic film layer having a composition including 85-90 wt-% of starch based polymer, such as unmodified high amylose starch.

According to the invention, starch based polymer is unmodified or chemically modified high amylose starch, also called amylose rich starch. Chemically modified starch is preferably hyrdoxypropylated starch. Amylose content of the starch based polymer is at least 40%, preferably more than 70%, for example the amylose content is between 40 and 70 wt-%.

Additionally starch based polymer may include additives. For example, starch based polymer formulation may include additives, such as plasticizers, e.g. water; ethylene vinyl alcohol (EVOH) or stearic acid. EVOH (e.g. 2%) may be used for the film flexibility and a small amount of stearic acid as a slip agent. High transparency of the label facestock is preferred, i.e. the plastic film structure of the facestock is transparent to visible light.. According to an embodiment the haze of the facestock is less than 25%, preferably less than 15% and most preferably less than 20%. For example, the haze is between 2 and 25%.

## Claims

1. A label adapted to be attached to the surface of an item, the label comprising an adhesive layer (2) and a plastic facestock layer transparent to visible light (4), wherein the plastic facestock layer comprises at least one layer comprising from 85 to 90 wt.% of starch based polymer which is unmodified or chemically modified amylose rich starch, or starch blend, and wherein an amylose content of the starch based polymer is at least 40 %, and wherein the label is arranged to be removable from the surface (3).

2. The label according to claim 1, wherein the amylose content of the starch based polymer is more than 70 %.

3. The label according to claim 1 or 2, wherein the starch based polymer is hydroxypropylated starch.

4. The label according to any of the preceding claims, wherein the starch blend comprises biopolymer.

5. The label according to claim 4, wherein the biopolymer is at least one of the following: cellulose nanofibers, chitosan or lignin.

6. The label according to any of the preceding claims, wherein the label is repulpable.

7. The label according to claim 6, wherein the label is repulpable together with paper based labels or paper waste.

8. The label according to any of the preceding claims, wherein a haze of the facestock is less than 25 %, preferably less than 15 % and most preferably less than 20 %.

9. A use of a label according to any of the preceding claims for labelling recyclable or reusable items.

10. A method for re-cycling a label attached to the surface of an item, wherein the label comprises an adhesive layer and a plastic facestock layer transparent to visible light including at least one layer comprising from 85 to 90 wt.% of starch based polymer, which is unmodified or chemically modified amylose rich starch, or starch blend, and wherein an amylose content of the starch based polymer is at least 40 %, the method comprising: carrying the item to a washing process comprising heated washing liquid; exposing the label to the hot washing liquid; peeling off the label from the surface of the item; collecting the peeled off labels from the washing liquid; and repulping the collected labels.

11. The method according to claim 10, wherein the washing liquid comprises caustic soda 1-4 wt-% and has temperature in the range of 60 °C to 90 °C.

12. A plastic facestock of a label according to claim 1, wherein the plastic facestock is transparent to visible light and includes at least one plastic film layer comprising from 85 to 90 wt.% of starch based polymer, which is unmodified or chemically modified amylose rich starch, or starch blend, and wherein the amylose content of the starch based polymer is at least 40 %.

13. The plastic facestock according to claim 12, wherein the amylose content of the starch based polymer is more than 70 %.

14. The plastic facestock according to claim 12 or 13, wherein the starch based polymer is hydroxypropylated starch.

15. The facestock according to any of the claims 12 to 14, wherein a haze of the facestock is less than 25 %, preferably less than 15 % and most preferably less than 20 %.

16. A combination of an item and a label according to claim 1, wherein the combination consists of the label adhered to a surface of the item, the label comprising a plastic facestock layer transparent to visible light and an adhesive layer against one side of the plastic facestock layer, wherein said plastic facestock layer comprises at least one layer comprising from 85 to 90 wt.% of a starch based polymer which is unmodified or chemically modified amylose rich starch, or starch blend, and wherein an amylose content of the starch based polymer is at least 40 %, and wherein said label is arranged to be removable from the surface of the item.

## Patentansprüche

1. Ein Etikett, das ausgestaltet ist, um an der Oberfläche eines Artikels befestigt zu werden, wobei das Etikett eine Klebeschicht (2) und eine für Licht (4) durchlässige Kunststoff-Deckschicht aufweist, wobei die Kunststoff-Deckschicht mindestens eine Schicht aufweist, die 85 bis 90 Gew.-% eines auf Stärke basierenden Polymers aufweist, das unmodifizierte oder chemisch modifizierte amylosereiche Stärke oder eine Stärkemischung ist, und wobei der Amylosegehalt des auf Stärke basierenden Polymers mindestens 40 % beträgt, und wobei das Etikett so angebracht ist, dass es sich von der Oberfläche (3) entfernen lässt.

2. Etikett gemäß Anspruch 1, wobei der Amylosegehalt des auf Stärke basierenden Polymers mehr als 70 % beträgt.

3. Etikett gemäß Anspruch 1 oder 2, wobei das auf Stärke basierende Polymer hydroxypropylierte Stärke ist.

4. Etikett gemäß einem der vorhergehenden Ansprüche, wobei die Stärkemischung ein Biopolymer aufweist.

5. Etikett gemäß Anspruch 4, wobei das Biopolymer mindestens eines der folgenden ist: Zellulose-Nanofasern, Chitosan oder Lignin.

6. Etikett gemäß einem der vorhergehenden Ansprüche, wobei das Etikett repulpierbar ist.

7. Etikett gemäß Anspruch 6, wobei das Etikett zusammen mit papierbasierten Etiketten oder Papierabfällen repulpierbar ist.

8. Etikett gemäß einem der vorhergehenden Ansprüche, wobei eine Trübung der Deckschicht weniger als 25 %, vorzugsweise weniger als 15 % und am meisten bevorzugt weniger als 20 % beträgt.

9. Eine Verwendung eines Etiketts gemäß einem der vorhergehenden Ansprüche zur Kennzeichnung von wiederverwertbaren oder wiederverwendbaren Artikeln.

10. Ein Verfahren zur Wiederverwertung eines an der Oberfläche eines Artikels befestigten Etiketts, wobei das Etikett eine Klebeschicht und eine für sichtbares Licht durchlässige Kunststoff-Deckschicht aufweist, die mindestens eine Schicht aufweist, die 85 bis 90 Gew.-% eines auf Stärke basierenden Polymers aufweist, das unmodifizierte oder chemisch modifizierte amylosereiche Stärke oder eine Stärkemischung ist, und wobei ein Amylosegehalt des auf Stärke basierenden Polymers mindestens 40 % beträgt, wobei das Verfahren Folgendes umfasst: Befördern des Artikels zu einem Waschprozess, der erwärmte Waschflüssigkeit enthält; Aussetzen des Etiketts der heißen Waschflüssigkeit; Ablösen des Etiketts von der Oberfläche des Artikels; Aufsammeln der abgelösten Etiketten aus der Waschflüssigkeit; und Repulpieren der aufgesammelten Etiketten.

11. Verfahren gemäß Anspruch 10, wobei die Waschflüssigkeit 1 - 4 Gew.-% Natronlauge enthält und eine Temperatur im Bereich von 60 °C bis 90 °C hat.

12. Eine Kunststoff-Deckschicht eines Etiketts gemäß Anspruch 1, wobei die Kunststoff-Deckschicht für sichtbares Licht durchlässig ist und mindestens eine Kunststoff-Folienschicht aufweist, die 85 bis 90 Gew.-% eines auf Stärke basierenden Polymers aufweist, das unmodifizierte oder chemisch modifizierte amylosereiche Stärke oder eine Stärkemischung ist, und wobei der Amylosegehalt des auf Stärke basierenden Polymers mindestens 40 % beträgt.

13. Kunststoff-Deckschicht gemäß Anspruch 12, wobei der Amylosegehalt des auf Stärke basierenden Polymers mehr als 70 % beträgt.

14. Kunststoff-Deckschicht gemäß Anspruch 12 oder 13, wobei das auf Stärke basierenden Polymer hydroxypropylierte Stärke ist.

15. Deckschicht gemäß einem der Ansprüche 12 bis 14, wobei eine Trübung der Deckschicht weniger als 25 %, vorzugsweise weniger als 15 % und am meisten bevorzugt weniger als 20 % beträgt.

16. Eine Kombination eines Artikels und eines Etiketts gemäß Anspruch 1, wobei die Kombination aus dem an einer Oberfläche des Artikels aufgeklebten Etikett besteht, wobei das Etikett eine für sichtbares Licht durchlässige Kunststoff-Deckschicht und eine Klebeschicht gegen eine Seite der Kunststoff-Deckschicht aufweist, wobei die genannte Kunststoff-Deckschicht mindestens eine Schicht aufweist, die 85 bis 90 Gew.-% eines auf Stärke basierenden Polymers aufweist, das unmodifizierte oder chemisch modifizierte amylosereiche Stärke oder eine Stärkemischung ist, und wobei ein Amylosegehalt des auf Stärke basierenden Polymers mindestens 40 % beträgt, und wobei das Etikett so angeordnet ist, dass es sich von der Oberfläche des Artikels entfernen lässt.

## Revendications

1. Étiquette adaptée pour être attachée à la surface d'un article, l'étiquette comprenant une couche adhésive (2) et une couche de pellicule frontale en plastique transparente à la lumière visible (4), dans laquelle la couche de pellicule frontale en plastique comprend au moins une couche comprenant 85 à 90% en poids de polymère à base d'amidon qui est un amidon riche en amylose non modifié ou chimiquement modifié, ou un mélange d'amidon, et dans laquelle une teneur en amylose du polymère à base d'amidon est d'au moins 40%, et dans laquelle l'étiquette est agencée de façon à pouvoir être retirée de la surface (3).

2. Étiquette selon la revendication 1, dans laquelle la teneur en amylose du polymère à base d'amidon est supérieure à 70%.

3. Étiquette selon la revendication 1 ou 2, dans laquelle le polymère à base d'amidon est de l'amidon hydroxypropylé.

4. Étiquette selon l'une des revendications précédentes, dans laquelle le mélange d'amidon comprend un biopolymère.

5. Étiquette selon la revendication 4, dans laquelle le biopolymère est au moins l'un de ce qui suit : des nanofibres de cellulose, du chitosane ou de la lignine.

6. Étiquette selon l'une des revendications précédentes, dans laquelle l'étiquette peut être remise en pâte.

7. Étiquette selon la revendication 6, dans laquelle l'étiquette peut être remise en pâte conjointement avec des étiquettes à base de papier ou des déchets de papier.

8. Étiquette selon l'une des revendications précédentes, dans laquelle un trouble de la pellicule frontale est inférieur à 25%, de préférence inférieur à 15% et plus préférablement inférieur à 20%.

9. Utilisation d'une étiquette selon l'une des revendications précédentes pour l'étiquetage d'articles recyclables ou réutilisables.

10. Procédé pour recycler une étiquette attachée à la surface d'un article, dans lequel l'étiquette comprend une couche adhésive et une couche de pellicule frontale en plastique transparente à la lumière visible comportant au moins une couche comprenant 85 à 90% en poids de polymère à base d'amidon, qui est un amidon riche en amylose non modifié ou chimiquement modifié, ou un mélange d'amidon, et dans lequel une teneur en amylose du polymère à base d'amidon est d'au moins 40%, le procédé comprenant : transporter l'article vers un processus de lavage comprenant un liquide de lavage chauffé ; exposer l'étiquette au liquide de lavage chaud ; décoller l'étiquette de la surface de l'article ; collecter les étiquettes décollées du liquide de lavage ; et remettre en pâte les étiquettes collectées.

11. Procédé selon la revendication 10, dans lequel le liquide de lavage comprend 1 à 4% en poids de soude caustique et a une température dans la plage de 60°C à 90°C.

12. Pellicule frontale en plastique d'une étiquette selon la revendication 1, dans laquelle la pellicule frontale en plastique est transparente à la lumière visible et comporte au moins une couche de film plastique comprenant 85 à 90% en poids de polymère à base d'amidon, qui est un amidon riche en amylose non modifié ou chimiquement modifié, ou un mélange d'amidon, et dans laquelle la teneur en amylose du polymère à base d'amidon est d'au moins 40%.

13. Pellicule frontale en plastique selon la revendication 12, dans laquelle la teneur en amylose du polymère à base d'amidon est supérieure à 70%.

14. Pellicule frontale en plastique selon la revendication 12 ou 13, dans laquelle le polymère à base d'amidon est de l'amidon hydroxypropylé.

15. Pellicule frontale selon l'une des revendications 12 à 14, dans laquelle un trouble de la pellicule frontale est inférieur à 25%, de préférence inférieur à 15% et plus préférablement inférieur à 20%.

16. Combinaison d'un article et d'une étiquette selon la revendication 1, dans laquelle la combinaison consiste en l'étiquette collée à une surface de l'article, l'étiquette comprenant une couche de pellicule frontale en plastique transparente à la lumière visible et une couche adhésive contre un côté de la couche de pellicule frontale en plastique, dans laquelle ladite couche de pellicule frontale en plastique comprend au moins une couche comprenant 85 à 90% en poids d'un polymère à base d'amidon qui est un amidon riche en amylose non modifié ou chimiquement modifié, ou un mélange d'amidon, et dans laquelle une teneur en amylose du polymère à base d'amidon est d'au moins 40% et dans laquelle ladite étiquette est agencée de façon à pouvoir être retirée de la surface de l'article.
